# EUROPÄISCHE PATENTSCHRIFT

(11) **EP 3 122 835 B1**
(45) Veröffentlichungstag und Bekanntmachung des Hinweises auf die Patenterteilung: **27.04.2022**
(21) Anmeldenummer: 15715956.7
(22) Anmeldetag: 09.03.2015
(51) Int. Cl.: C09K 3/14

(54) **SCHLEIFTEILCHENAGGLOMERAT**
ABRASIVE PARTICLE AGGLOMERATE
AGGLOMÉRAT DE PARTICULES ABRASIVES

(30) Priorität: 25.03.2014 AT 2122014
(43) Veröffentlichungstag der Anmeldung: 01.02.2017
(60) Teilanmeldung: 21216300.0
(73) Patentinhaber: Tyrolit - Schleifmittelwerke Swarovski K.G., 6130 Schwaz (AT)
(72) Erfinder: HIRSCHMANN, Martin, 6113 Wattenberg (AT)
(74) Vertreter: Torggler & Hofmann Patentanwälte - Innsbruck
(86) Internationale Anmeldenummer: PCT/AT2015/000034
(87) Internationale Veröffentlichungsnummer: WO 2015/143461

(56) Entgegenhaltungen:
- WO-A1-02/32832
- WO-A1-02/38696
- WO-A2-02/28980
- DE-U1- 20 122 729
- KR-A- 20030 059 233
- US-A1- 2013 000 210
- US-A1- 2013 000 215

## Beschreibung

Die Erfindung betrifft ein Agglomerat aus wenigstens zwei weitgehend stäbchenförmigen Schleifteilchen. Die vorliegende Erfindung betrifft auch ein Verfahren zum Herstellen eines solchen Agglomerats sowie ein Schleifwerkzeug.

Agglomerate aus Schleifkörnern sind seit Langem bekannt und werden in vielen Variationen in gebundenen Schleifkörpern, beispielsweise Schleifscheiben, eingesetzt.

So beschreibt beispielsweise die EP2318468 gesinterte Schleifkornagglomerate aus Aluminiumoxid mit einem mittleren Primärteilchendurchmesser von weniger als fünf Mikrometern und einer im Wesentlichen sphärischen Außenkontur.

Der Vorteil der in der EP2318468 geschilderten Schleifkornagglomerate besteht darin, dass feinteilige Schleifkörner als Primärteilchen eingesetzt werden können, aus denen dann ein Agglomeratkorn gebildet wird, welches im Vergleich zu einem Einzelkorn vergleichbarer Größe ein günstigeres Verschleißverhalten im Schleifprozess zeigt. Während ein Einzelkorn vergleichbarer Größe im Bearbeitungsprozess stumpf oder zerstört wird, brechen bei der Verwendung von Schleifkornagglomeraten gemäß '468 wiederholt einzelne Körnchen aus dem Verbund, sodass immer wieder neue Schleifkanten gebildet werden. So zeigt ein Schleifkörper unter Verwendung von Schleifkornagglomeraten gemäß der EP2318468 ein besseres Schliffbild sowie eine höhere Lebensdauer. In dem Verfahren zur Herstellung der Kornagglomerate gemäß der EP2318468 wird der Rohstoff mittels Nassvermahlung auf eine mittlere Teilchengröße von kleiner 5 Mikrometer, besonders bevorzugt kleiner 0,5 Mikrometer, vermahlen. Die erhaltene Dispersion wird über Sprühtrocknung getrocknet, wobei Agglomeratgrünkörper entstehen. Diese Agglomerate weisen einen Durchmesser zwischen fünf Mikrometer und 500 Mikrometer auf. Die so erhaltenen Agglomeratgrünkörper werden anschließend gesintert, wodurch die gewünschten Schleifkornagglomerate ohne den Einsatz von Bindemitteln gewonnen werden können. Die beschriebenen Kornagglomerate eignen sich aufgrund der mikroskopischen Primärkörner besonders für Feinschleifoperationen.

Die US 3,048,482 von Hurst zeigt pyramidenförmige Schleifkörperchen, die aus einzelnen Schleifkörnern zusammengesetzt und von einem organischen Binder zusammengehalten werden. Diese Schleifkornagglomerate sind in Ausnehmungen in einer flexiblen Matrix eingebettet und dort über einen thermoplastischen Binder fixiert.

Agglomerate aus keramischen Aggregatteilchen und keramischen Schleif-Aggregatteilchen sind bereits aus der Schrift DE 201 22 729 U1 bekannt, wobei die keramischen Aggregatteilchen in Stabform vorliegen können.

Agglomerate aus sphärischen Schleifteilchen sind bereits aus der Schrift WO 02/38696 A1 bekannt, wobei die Schleifteilchen auch abweichend von dieser sphärischen Form eine ellipsoide oder irregulär rundliche Form aufweisen können.

Gestreckte oder stäbchenförmige Schleifkörner sind beispielsweise aus der US 3,387,957 an Howard bekannt. Howard beschreibt darin die Herstellung mikrokristalliner Schleifkörner aus Bauxit mit einem Aspektverhältnis von Länge zu Durchmesser größer als 1 und bis zu 5. Die Schrift zeigt auch die Verwendung dieser Körner in Schleifscheiben, wobei die länglichen Bauxitkörner in einer organischen Bindung eingebettet sind.

Solch stäbchenförmige oder gestreckte Schleifkörner können beispielsweise über Extrusion und anschließende Sinterung von Schleifmittel hergestellt werden und sind kommerziell verfügbar. So sind unter der Produktbezeichnung CERPASS TGE^{®} von SAINT-GOBAIN Grains and Powders gestreckte Schleifkörner aus Korund erhältlich, die bei der sogenannten grit size von 36 eine Länge von etwa 500 Mikrometern aufweisen. Typische physikalische Eigenschaften dieses Produkts sind eine Härte von 21,60 GPa (nach Vickers Diamant), eine Dichte von 3,91 g/cm³ (Helium Pyknometrie) und eine Kristallitgröße von 0,17 µm (gemessen aus rasterelektronenmikroskopischen Aufnahmen).

Die EP 2 324 957 beschreibt die Herstellung und Verwendung filamentöser Sol-Gel-Aluminiumoxid -Schleifkörner.

Schleifkornagglomerate nach Stand der Technik sind aus mikroskopischen Schleifkörnern zusammengesetzte Gebilde ohne Vorzugsorientierung der individuellen Schleifkörner zueinander.

Die Erfindung hat zur Aufgabe, verbesserte Schleifkornagglomerate sowie ein Schleifwerkzeug mit einem Schleifkörper unter Verwendung der erfindungsgemäßen Schleifkornagglomerate und ein Verfahren zur Herstellung der erfindungsgemäßen Schleifkornagglomerate und eines Schleifkörpers anzugeben. Ein weiterer Aspekt der Erfindung ist die Verbesserung der räumlichen Verteilung bzw. Orientierung von gestreckten oder stäbchenförmigen Schleifteilchen in einem Schleifkornagglomerat.

Gelöst wird diese Aufgabe durch ein Schleifkornagglomerat nach Anspruch 1, einem Schleifwerkzeug nach Anspruch 7 sowie einem Verfahren zur Herstellung von Schleifkornagglomeraten nach Anspruch 10. Vorteilhafte Ausführungsformen sind in den Unteransprüchen angegeben.

Das verbesserte Schleifkornagglomerat besteht aus wenigstens zwei weitgehend stäbchenförmigen Schleifteilchen, wobei die wenigstens zwei weitgehend stäbchenförmigen Schleifteilchen über eine Glasbindung miteinander verbunden sind, und die Längsachsen der wenigstens zwei stäbchenförmigen Schleifteilchen in unterschiedliche Raumrichtungen weisen. Unter Schleifteilchen wird in der Anmeldung ein abrasiver Körper verstanden, der entweder aus einem Schleifkorn besteht oder aus mehreren Schleifkörnern zusammengesetzt ist. Unter Schleifmittel ist der abrasive Werkstoff verstanden, aus dem ein Schleifkorn besteht.

In Versuchen der Anmelderin hat sich nämlich herausgestellt, dass besonders interessante Verschleißeigenschaften erzielt werden, wenn die Schleifteilchen, aus denen das Schleifkornagglomerat zusammengesetzt ist, eine ausgeprägte Streckung aufweisen, d.h. eine stäbchenförmige Gestalt aufweisen. Unter "stäbchenförmig" sind freilich auch Abweichungen von der idealen Geometrie eines Zylinders gemeint. So können die stäbchenförmigen Schleifteilchen gekrümmt sein und / oder an ihren Enden etwa eine Nase oder eine Verdickung zeigen.

Die wenigstens zwei stäbchenförmigen Schleifteilchen sind miteinander über eine Glasbindung verbunden. Dies kann beispielsweise so realisiert sein, dass die Schleifteilchen an ihren Berührungspunkten von erschmolzenem und wiedererstarrtem Glas benetzt und so miteinander verbunden sind. Die Verbindung befindet sich vorzugweise in der Mitte der stäbchenförmigen Schleifteilchen. Dadurch dass die Längsachsen der stäbchenförmigen Schleifteilchen in unterschiedliche Raumrichtungen weisen, ergibt sich eine äußere Gestalt, die an eine Panzersperre oder einen Igel erinnert. Diese Form von Schleifkornagglomeraten hat sich als besonders günstig hinsichtlich der Schleifeigenschaften erwiesen, denn so werden im Zuge der Abnützung immer wieder frische Schnittkanten angeboten, welche durch die Querschnitte der in unterschiedliche Raumrichtungen weisenden stäbchenförmigen Schleifteilchen gebildet sind.

Günstigerweise besteht ein erfindungsgemäßes Schleifkornagglomerat aus einer Vielzahl von stäbchenförmigen Schleifteilchen, z.B. aus vier bis zwölf Schleifteilchen. Vorteilhaft ist es, wenn die Orientierung der stäbchenförmigen Schleifteilchen möglichst gleichmäßig in alle Raumrichtungen verteilt ist.

Vorzugsweise kann vorgesehen sein, dass die Schleifteilchen von Schleifkörnern, bestehend aus Schleifmittel, weitgehend binderfrei dargestellt werden. Dieses Ausführungsbeispiel beschreibt den Fall, bei dem jeweils eines der stäbchenförmigen Schleifteilchen durch ein stäbchenförmiges Schleifkorn gebildet ist. Wie eingangs beschrieben, können solche Schleifteilchen durch Extrusion und anschließendes Sintern von Schleifmittel erzeugt werden.

In einer weiteren bevorzugten Ausbildung bestehen die stäbchenförmigen Schleifteilchen aus einem Schleifmittel und einem Bindemittel. In diesem Fall sind die Schleifteilchen nicht durch ein Schleifkorn gebildet, sondern bestehen aus mehreren Primär-Schleifkörnern aus Schleifmittel, die über eine geeignete Bindung miteinander verbunden sind. Als Schleifmittel in Frage kommen alle bekannten abrasiven Werkstoffe wie etwa Korund, kubisches Bornitrid, Siliziumkarbid, Diamant.

Zur Herstellung stäbchenförmiger Schleifteilchen werden die Primärkörner, die Abmessungen kleiner gleich des zu erzielenden Schleifteilchens aufweisen, mit einem Binder gemischt, diese Mischung formgebend verarbeitet, vorzugsweise extrudiert und anschließend auf geeignete Weise ausgehärtet.

Das Beispiel ist nicht darauf beschränkt, dass die Schleifteilchen aus einem Schleifmittel allein und Binder bestehen. So können auch Mischungen verschiedener Schleifmittel in einem Schleifteilchen realisiert sein. Auch kann vorgesehen sein, dass ein Teil der Schleifkörner aus dem einen Schleifmittel oder einer Mischung von Schleifmitteln aufgebaut ist, und andere Schleifkörner des Agglomerats aus einem anderen Schleifmittel oder einer anderen Mischung von Schleifmitteln bestehen.

In einer anderen bevorzugten Ausführungsform kann vorgesehen sein, dass ein Teil der Schleifteilchen von Schleifkörnern, bestehend aus Schleifmittel und weitgehend binderfrei, gebildet ist und dass der andere Teil der Schleifteilchen aus einem Schleifmittel und einem Bindemittel besteht. In anderen Worten besteht hier das Agglomerat aus einer Mischung von Schleifteilchen, welche jeweils durch ein stäbchenförmiges Schleifkorn allein gebildet sind, und anderen Schleifteilchen, welche aus mehreren Primär-Schleifkörnern aus Schleifmittel und geeigneter Bindung gebildet sind.

Erfindungsgemäß ist die Ausprägung, dass die Schleifteilchen ein Aspektverhältnis von Länge zu Durchmesser von mindestens 2:1 aufweisen. Durch die ausgeprägte Streckung der Schleifteilchen werden besonders günstige Schleifeigenschaften erzielt. Dies ist dadurch erklärbar, dass die Schnittflächen stäbchenförmiger Teilchen weitestgehend kreisförmig oder elliptisch sind und diese Querschnittsform bei entsprechender Streckung des Teilchens während des Verschleißes für längere Zeit erhalten bleibt, wobei im Zuge der Abnützung immer wieder frische Schnittkanten gebildet werden. Dies soll anhand eines Beispiels erläutert werden: man stelle sich ein gestrecktes Schleifteilchen vor, dessen Längsachse bezüglich des Schleifwerkzeugs radial verläuft, d.h. der Vektor der Umfangsgeschwindigkeit des Schleifwerkzeuges steht normal auf die Längsachse des Schleifteilchens. Bei annähernd zylindrischer Form des Schleifteilchens bildet sich also eine kreisförmige Schnittfläche aus, die bei Abrieb des Schleifteilchens solange erhalten bleibt, bis das stäbchenförmige Schleifteilchen aufgezehrt ist.

Im Versuch zeichnen sich Agglomerate dieser bevorzugten Ausprägung durch besonders aggressives Schleifverhalten aus und eignen sich besonders für Schleifoperationen mit hoher Kontaktzahl wie Innenrundschleifen oder Flachschleifen.

In einer weiteren Ausführungsform ist vorgesehen, dass die Länge der Schleifteilchen wenigstens 100 Mikrometer, besonders bevorzugt rund 250 bis 800 Mikrometer beträgt.

Die Verwendung makroskopischer Schleifteilchen, d.h. in ihrer Größenabmessung deutlich von üblicherweise verwendetem Schleifkorn abweichender Schleifteilchen hat sich als besonders vorteilhaft herausgestellt.

Der im vorangegangenen Ausführungsbeispiel erläuterte Effekt ist nämlich besonders deutlich, wenn die Teilchen eine gewisse Mindestabmessung aufweisen. Die Wahl einer Länge der Schleifteilchen von wenigstens 100 Mikrometern, besonders bevorzugt rund 250 bis 800 Mikrometern bewirkt ein besonders aggressives Schleifverhalten bei gleichzeitig günstigem Werkzeugverschleiß.

In Kombination mit dem Merkmal, dass die Schleifteilchen von Schleifkörnern aus Schleifmittel und weitgehend binderfrei dargestellt werden, werden besonders vorteilhafte Ergebnisse erzielt. Werden etwa Schleifteilchen aus mikrokristallinem Korund mit einer durchschnittlichen Länge von ca. 500 Mikrometern und einem Durchmesser von ca. 230 Mikrometern verwendet, sind besonders günstige Eigenschaften zu beobachten. Durch den muscheligen (conchoidalen) Bruch des mikrokristallinen Korunds weisen diese Schleifteilchen gute Selbstschärfeigenschaften auf. Die Abmessungen bewirken eine hohe absolute Festigkeit der Schleifteilchen.

Weitere Ausführungsformen beschreiben ein Schleifwerkzeug mit einem Schleifkörper, wobei der Schleifkörper wenigstens zwei Agglomerate nach einem der vorhergehenden Beispiele aufweist, die in eine Bindungsmatrix eingebettet sind.

Die zuvor beschriebenen Agglomerate werden über einen Binder zu einem Schleifkörper verbunden. Aus dem Schleifkörper kann ein Schleifwerkzeug, beispielsweise eine Schleifscheibe, hergestellt werden.

In einer bevorzugten Ausführungsform ist vorgesehen, dass die Bindung des Schleifkörpers eine Kunstharzbindung ist.

In einer alternativen Ausführungsform ist vorgesehen, dass die Bindung des Schleifkörpers eine Keramikbindung ist.

Günstigerweise ist das Agglomerat dergestalt, dass die Schüttdichte der Agglomerate etwa 50 - 99% der Schüttdichte der Schleifteilchen als Ausgangsmaterial beträgt.

Das Verfahren zur Herstellung eines Agglomerates umfasst die Schritte:
- Bereitstellen eines Gemisches aus wenigstens zwei stäbchenförmigen Schleifteilchen und Glaspartikeln, wobei die Glaspartikel blockig, kantig oder im Wesentlichen kugelförmig sind,
- Erhitzen des Gemisches auf eine Temperatur, die über der Schmelztemperatur der Glaspartikel und unter der Schmelztemperatur der Schleifteilchen liegt und
- Abkühlen des Gemisches auf eine Temperatur, die unterhalb der Schmelztemperatur der Glaspartikel liegt.

Durch Aufschmelzen der Glasphase und die darauffolgende Erstarrung entstehen zwischen den Schleifteilchen feste Hälse aus Glas.

Besonders vorteilhaft ist es, wenn der Anteil von Glaspartikeln im Gemisch von Schleifteilchen und Glaspartikeln zwischen 2 und 25 Gewichtsprozent liegt.

In den Versuchen der Anmelderin hat sich überraschend herausgestellt, dass bei Verwendung kugelförmiger Glaspartikel, also Glasperlen, sich die räumliche Ausrichtung der stäbchenförmigen Schleifteilchen besonders günstig beeinflussen lässt. Es ist ja ein Ziel der gegenständlichen Erfindung, dass die Längsachsen der stäbchenförmigen Schleifteilchen in unterschiedliche Raumrichtungen weisen.

Nach einer weiteren bevorzugten Ausführungsform ist vorgesehen, dass der Durchmesser der Glaspartikel im Bereich von 50 bis 1000, vorzugsweise zwischen 150 bis 250 Mikrometer liegt.

In einem Versuch wurden stäbchenförmige Schleifteilchen mit einem Durchmesser von ca. 100 Mikrometern (CERPASS TGE^{®} 120 grit) mit Glasperlen einer Fraktion von 150-250 Mikrometern gemischt. Das Gewichtsverhältnis von Korn zu Kugeln betrug dabei 100:5. Die nach dem Verfahren hergestellten Agglomerate weisen eine besonders gleichmäßige Verteilung der Orientierung der Körner in alle Raumrichtungen auf, in anderen Worten entsteht ein Agglomerat mit möglichst wenigen parallel zueinander liegenden Körnern.

Die Erfindung wird weiter durch die Figuren veranschaulicht. Dabei zeigen:
- Fig. 1: eine schematische Darstellung eines Kornagglomerates,
- Fig. 2: eine schematische Darstellung einzelner Primärkörner,
- Fig. 3: eine lichtmikroskopische Aufnahme einiger Kornagglomerate,
- Fig. 4: ein Flussdiagramm des Herstellungsprozesses,
- Fig. 5: ein Schleifwerkzeug, hier eine Schleifscheibe unter Verwendung der erfindungsgemäßen Agglomerate

### Detaillierte Beschreibung der Figuren:

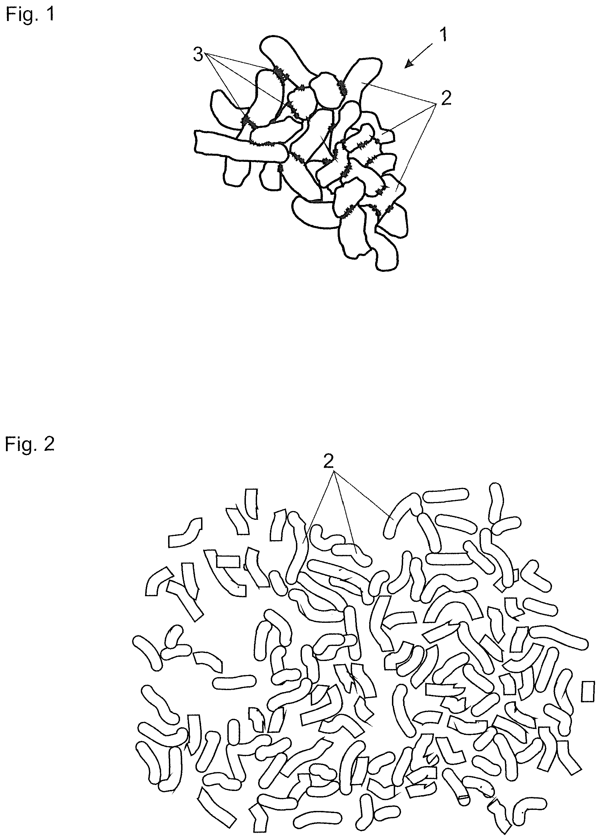

Figur 1 zeigt schematisch ein Schleifkornagglomerat 1 aus mehreren stäbchenförmigen Schleifteilchen 2. Die einzelnen Schleifteilchen 2 sind über eine Glasbindung 3 miteinander verbunden. Die Glasbindung 3 ist in Form von Hälsen zwischen den stäbchenförmigen Schleifteilchen 2 ausgebildet.

Figur 2 zeigt einzelne gestreckte Schleifteilchen 2.

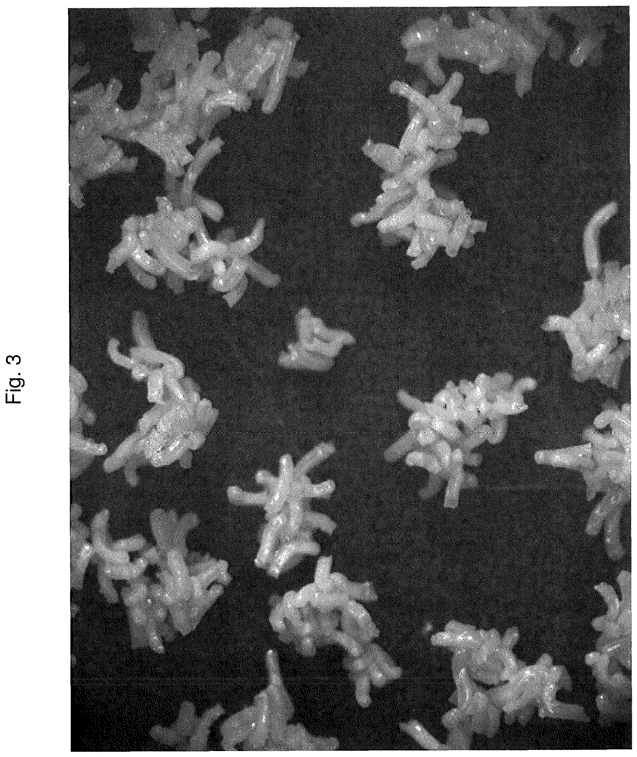

In Figur 3 sind in einer lichtmikroskopischen Aufnahme einige Schleifkornagglomerate 1 zu sehen. Es ist gut erkennbar, dass die stäbchenförmigen Schleifteilchen 2 in unterschiedliche Raumrichtungen weisen.

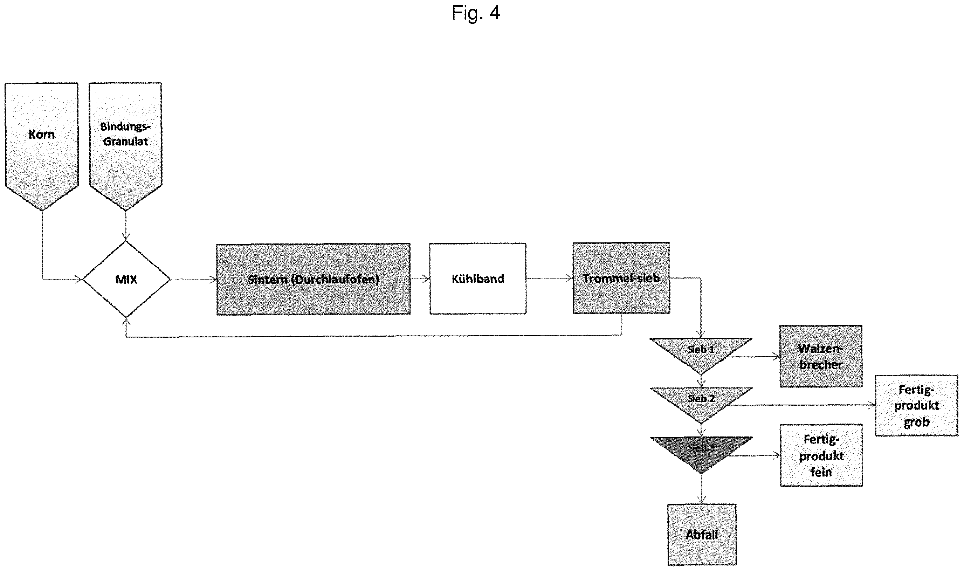

Figur 4 illustriert schematisch den Herstellungsprozess zur Gewinnung von Schleifkornagglomeraten 1.

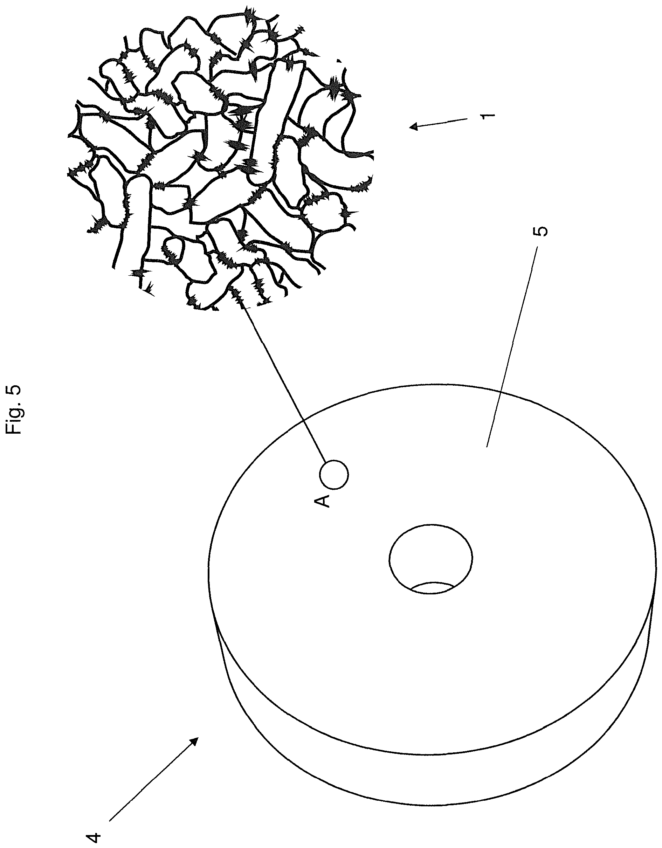

Figur 5 zeigt ein Schleifwerkzeug 4, in diesem Fall als Schleifscheibe ausgebildet, das aus einem gebundenen Schleifkörper 5 unter Verwendung der erfindungsgemäßen Agglomerate 1 besteht. Das Schleifwerkzeug bzw. der Schleifkörper können natürlich auch beliebig andere Formen aufweisen.

Durch den vergrößerten Ausschnitt A wird illustriert, dass in die Bindung des Schleifkörpers 5 Agglomerate 1 eingebettet sind.

Liste der verwendeten Bezugszeichen:
- 1: Schleifkornagglomerat
- 2: Schleifteilchen
- 3: Glasbindung
- 4: Schleifwerkzeug

## Patentansprüche

1. Agglomerat (1) aus wenigstens zwei weitgehend stäbchenförmigen Schleifteilchen (2), **dadurch gekennzeichnet, dass** die wenigstens zwei der weitgehend stäbchenförmigen Schleifteilchen (2) über eine Glasbindung (3) miteinander verbunden sind, wobei die Längsachsen der wenigstens zwei stäbchenförmigen Schleifteilchen (2) in unterschiedliche Raumrichtungen weisen, wobei die Schleifteilchen (2) ein Aspektverhältnis von Länge zu Durchmesser von mindestens 2:1 aufweisen.

2. Agglomerat (1) gemäß Anspruch 1, **dadurch gekennzeichnet, dass** die Schleifteilchen (2) von Schleifkörnern, bestehend aus Schleifmittel, weitgehend binderfrei dargestellt werden.

3. Agglomerat (1) nach Anspruch 1, **dadurch gekennzeichnet, dass** die Schleifteilchen (2) aus wenigstens einem Schleifmittel und einem Bindemittel bestehen.

4. Agglomerat (1) nach Anspruch 1, **dadurch gekennzeichnet, dass** ein Teil der Schleifteilchen (2) von Schleifkörnern, bestehend aus Schleifmittel und weitgehend binderfrei, gebildet ist und dass der andere Teil der Schleifteilchen (2) aus einem Schleifmittel und einem Bindemittel besteht.

5. Agglomerat (1) nach wenigstens einem der vorangegangenen Ansprüche, **dadurch gekennzeichnet, dass** die Länge der Schleifteilchen (2) wenigstens 100 Mikrometer, besonders bevorzugt rund 250 bis 800 Mikrometer beträgt.

6. Agglomerat (1) nach wenigstens einem der vorangegangenen Ansprüche, **dadurch gekennzeichnet, dass** die Schüttdichte des Agglomerats (1) etwa 50 - 99% der Schüttdichte der Schleifteilchen (2) beträgt.

7. Schleifwerkzeug (4) mit einem Schleifkörper (5), **dadurch gekennzeichnet, dass** der Schleifkörper (5) wenigstens zwei Agglomerate (1) nach wenigstens einem der vorangegangenen Ansprüche aufweist, die in eine Bindungsmatrix eingebettet sind.

8. Schleifwerkzeug (4) nach Anspruch 7, **dadurch gekennzeichnet, dass** die Bindung eine Kunstharzbindung ist.

9. Schleifwerkzeug (4) nach Anspruch 7, **dadurch gekennzeichnet, dass** die Bindung eine Keramikbindung ist.

10. Verfahren zur Herstellung eines Agglomerates (1) nach wenigstens einem der Ansprüche 1 bis 6, umfassend die folgenden Verfahrensschritte:
- Bereitstellen eines Gemisches aus wenigstens zwei stäbchenförmigen Schleifteilchen (2) und Glaspartikeln, wobei die Glaspartikel blockig, kantig oder im Wesentlichen kugelförmig sind,
- Erhitzen des Gemisches auf eine Temperatur, die über der Schmelztemperatur der Glaspartikel und unter der Schmelztemperatur der Schleifteilchen (2) liegt und
- Abkühlen des Gemisches auf eine Temperatur, die unterhalb der Schmelztemperatur der Glaspartikel liegt.

11. Verfahren nach Anspruch 10, **dadurch gekennzeichnet, dass** der Anteil von Glaspartikeln im Gemisch von Schleifteilchen (2) und Glaspartikeln zwischen 2 und 25 Gewichtsprozent liegt.

12. Verfahren nach Anspruch 10 oder 11, **dadurch gekennzeichnet, dass** der Durchmesser der Glaspartikel im Bereich von 50 bis 1000, vorzugsweise zwischen 100 bis 500 Mikrometer liegt.

## Claims

1. An agglomerate (1) comprising at least two largely rod-shaped abrasive particles (2), **characterised in that** the at least two of the largely rod-shaped abrasive particles (2) are connected together by way of a glass binding (3), wherein the longitudinal axes of the at least two rod-shaped abrasive particles (2) face in different spatial directions, wherein the abrasive particles (2) have an aspect ratio of length to diameter of at least 2:1.

2. The agglomerate (1) according to claim 1 **characterised in that** the abrasive particles (2) are represented by abrasive grains comprising abrasive, largely binder-free.

3. The agglomerate (1) according to claim 1 **characterised in that** the abrasive particles (2) comprise at least an abrasive and a binding agent.

4. The agglomerate (1) according to claim 1 **characterised in that** a part of the abrasive particles (2) is formed by abrasive grains comprising abrasive and largely binder-free and that the other part of the abrasive particles (2) comprises an abrasive and a binding agent.

5. The agglomerate (1) according to at least one of the preceding claims **characterised in that** the length of the abrasive particles (2) is at least 100 micrometres, particularly preferably around 250 to 800 micrometres.

6. The agglomerate (1) according to at least one of the preceding claims **characterised in that** the bulk density of the agglomerate (1) is about 50 - 99% of the bulk density of the abrasive particles (2).

7. A grinding tool (4) comprising a grinding body (5), **characterised in that** the grinding body (5) has at least two agglomerates (1) according to at least one of the preceding claims, which are embedded in a binding matrix.

8. The grinding tool (4) according to claim 7 **characterised in that** the binding is a synthetic resin binding.

9. The grinding tool (4) according to claim 7 **characterised in that** the binding is a ceramic binding.

10. A method of producing an agglomerate (1) according to at least one of claims 1 to 6 including the following method steps:
- providing a mixture of at least two rod-shaped abrasive particles (2) and glass particles, wherein the glass particles are blocky, angular or substantially spherical,
- heating the mixture to a temperature which is above the melting temperature of the glass particles and below the melting temperature of the abrasive particles (2), and
- cooling the mixture to a temperature which is below the melting temperature of the glass particles.

11. The method according to claim 10 **characterised in that** the proportion of glass particles in the mixture of abrasive particles (2) and glass particles is between 2 and 25 percent by weight.

12. The method according to claim 10 or claim 11 **characterised in that** the diameter of the glass particles is in the range of between 50 and 1000, preferably between 100 and 500 micrometres.

## Revendications

1. Agglomérat (1) composé d'au moins deux particules abrasives (2) dans une large mesure en forme de bâtonnets, **caractérisé en ce que** les au moins deux des particules abrasives (2) dans une large mesure en forme de bâtonnets sont reliées l'une à l'autre par l'intermédiaire d'une liaison vitreuse (3), dans lequel les axes longitudinaux des au moins deux particules abrasives (2) en forme de bâtonnets pointent dans des directions spatiales différentes, dans lequel les particules abrasives (2) présentent un rapport d'aspect entre la longueur et le diamètre d'au moins 2:1.

2. Agglomérat (1) selon la revendication 1, **caractérisé en ce que** les particules abrasives (2) sont représentées dans une large mesure sans liant par des grains abrasifs constitués d'agent abrasif.

3. Agglomérat (1) selon la revendication 1, **caractérisé en ce que** les particules abrasives (2) sont constituées d'au moins un agent abrasif et d'un liant.

4. Agglomérat (1) selon la revendication 1, **caractérisé en ce qu'**une partie des particules abrasives (2) est formée de grains abrasifs, constitués d'agent abrasif et dans une large mesure sans liant, et que l'autre partie des particules abrasives (2) est constituée d'un agent abrasif et d'un liant.

5. Agglomérat (1) selon au moins l'une quelconque des revendications précédentes, **caractérisé en ce que** la longueur des particules abrasives (2) est d'au moins 100 micromètres, de manière particulièrement préférée à peu près de 250 à 800 micromètres.

6. Agglomérat (1) selon au moins l'une quelconque des revendications précédentes, **caractérisé en ce que** la densité apparente de l'agglomérat (1) est d'environ 50
- 99 % de la densité apparente des particules abrasives (2).

7. Outil de rectification (4) avec un corps abrasif (5), **caractérisé en ce que** le corps abrasif (5) présente au moins deux agglomérats (1) selon au moins l'une quelconque des revendications précédentes, qui sont intégrés dans une matrice de liaison.

8. Outil de rectification (4) selon la revendication 7, **caractérisé en ce que** la liaison est une liaison de résine synthétique.

9. Outil de rectification (4) selon la revendication 7, **caractérisé en ce que** la liaison est une liaison de céramique.

10. Procédé de fabrication d'un agglomérat (1) selon au moins l'une quelconque des revendications 1 à 6, comprenant les étapes de procédé suivantes :
- la fourniture d'un mélange composé d'au moins deux particules abrasives (2) en forme de bâtonnets et de particules de verre, dans lequel les particules de verre sont en forme de bloc, en forme d'arête ou sensiblement de forme sphérique,
- le chauffage du mélange à une température, qui est supérieure à la température de fusion des particules de verre et est inférieure à la température de fusion des particules abrasives (2), et
- le refroidissement du mélange à une température, qui est inférieure à la température de fusion des particules de verre.

11. Procédé selon la revendication 10, **caractérisé en ce que** la fraction de particules de verre dans le mélange de particules abrasives (2) et de particules de verre est comprise entre 2 et 25 % en poids.

12. Procédé selon la revendication 10 ou 11, **caractérisé en ce que** le diamètre des particules de verre se situe dans la plage de 50 à 1000, de préférence est compris entre 100 à 500 micromètres.
